# EUROPÄISCHE PATENTSCHRIFT

(11) **EP 1 010 505 B1**
(45) Veröffentlichungstag und Bekanntmachung des Hinweises auf die Patenterteilung: **22.03.2006**
(21) Anmeldenummer: 98124243.1
(22) Anmeldetag: 17.12.1998
(51) Int. Cl.: B27D 5/00, B32B 21/08, B27K 3/15

(54) **Furnier und Verfahren zum Erzeugen eines solchen**
Veneer and method of manufacture
Placage et procédé de fabrication d'un bois de placage

(43) Veröffentlichungstag der Anmeldung: 21.06.2000
(73) Patentinhaber: Bush Industries, Inc., Jamestown, N.Y. 14702-0460 (US)
(72) Erfinder: Zaher, Maximilian, 26125 Oldenburg (DE); Walter, Thomas, Dr., 26125 Oldenburg (DE)
(74) Vertreter: von Hellfeld, Axel

(56) Entgegenhaltungen:
- DD-A- 203 275
- DE-A- 1 944 336
- US-A- 3 522 125
- US-A- 5 405 705
- DATABASE WPI Section Ch, Week 8826 Derwent Publications Ltd., London, GB; Class A32, AN 88-180097 XP002102291 & JP 63 118247 A (OKURA IND CO LTD) , 23. Mai 1988
- DATABASE WPI Section Ch, Week 8545 Derwent Publications Ltd., London, GB; Class A18, AN 85-278974 XP002102292 & JP 60 187533 A (TONEN SEKIYU KAGAKU KK) , 25. September 1985
- DATABASE WPI Section Ch, Week 8826 Derwent Publications Ltd., London, GB; Class A32, AN 88-180098 XP002102293 & JP 63 118248 A (OKURA IND CO LTD) , 23. Mai 1988
- DATABASE WPI Section Ch, Week 8320 Derwent Publications Ltd., London, GB; Class A17, AN 83-47896K XP002102294 & JP 58 059836 A (IDEMITSU KOSAN CO LTD) , 9. April 1983
- PATENT ABSTRACTS OF JAPAN vol. 016, no. 103 (M-1221), 13. März 1992 & JP 03 278904 A (TATSUTA ELECTRIC WIRE & CABLE CO LTD), 10. Dezember 1991

## Beschreibung

Die Erfindung betrifft ein Verfahren zum Erzeugen eines Furniers nach dem Oberbegriff des Anspruchs 1 und ein derart hergestelltes Produkt.

Ein derartiger Verfahren ist aus DE 23 21 353-A bekannt.

Um den Verbrauch an edlen Hölzern möglichst gering zu halten, ist es heute weitgehend üblich, die Oberflächen von Gegenständen verschiedenster Art, z.B. von Möbeln, mit Furnier-Holz zu belegen.

DD 203 275 offenbart ein Verfahren zum Behandeln dünner Furniere mit einer Dicke von kleiner als 0,5 mm, bei dem ein Furnier mit einer styrenischen Lösung eines ungesättigten Polyesterharz und einer styrenischen Dispersion eines für die Polyesterfärbung bekannten Pigmentfarbstoffs getränkt, anschließend auf einer Rolle aufgewickelt und in der Rolle ohne Wärmezuführung gehärtet wird.

US-5,405,705 offenbart ein Verfahren zum Herstellen einer Laminatstruktur, bei dem zwischen einer Basisplatte und einem Furnier eine Kleberschicht angeordnet wird. Zum Verbinden des Furniers und der Basisplatte wird die Schichtstruktur Temperaturen zwischen 90°C und 160°C und Drücken zwischen 5 und 20 Bar ausgesetzt. Teile der Kleberschicht können von der Rückseite des Furniers teilweise in dieses eindringen, wobei ein Teil der Kleberschicht zwischen dem Furnier und der Basisplatte zurückbleibt, um für die gewünschte Verbindung derselben zu sorgen.

US-3,522,125 offenbart ein Verfahren zur Beschichtung eines Holzsubstrats, bei dem auf ein Holzsubstrat eine Polyethylenschicht und darauf eine Polyvinylfluoridschicht aufgetragen werden. Die Schichtstruktur wird mittels Erwärmung und Druck miteinander verbunden, wobei die Polyethylenschicht lediglich in äußere Oberflächenbereiche des Holzsubstrats eindringen kann. Dadurch wird die Oberfläche des Holzsubstrats verstärkt bzw. versteift, um einen besseren Schutz vor Beschädigung zu bie-. ten.

DE 2 321 353 A1 offenbart ein Verfahren zum Erzeugen eines Furniers, bei dem eine Schicht aus einem Polyoefin auf die Vorderseite eines Holz-Furnierblattes aufgebracht und das Holz-Furnierblatt und das Material der Schicht unter Druck von 5 bis 20 Bar und Temperaturen von 150°C bis 200°C so miteinander verbunden werden, dass das Material der Schickt von der Vorderseite in das Holz des Furnierblatt eindringt, wobei die Schicht ESI enthält.

JP 07-223 203 A offenbart ein mit dem Verfahren gemäß DE 2 321 353 A1 vergleichbares Verfahren, wobei ein Furnierblatt mit einer Stärke zwischen 200 µm und 1 nm erzeugt wird.

Die Erfindung hat das Ziel, ein Furnier bereitzustellen, das einfach und kostengünstig zu verarbeiten ist, den ästhetischen Eindruck des hochwertigen Holzes beibehält und chemisch und physikalisch belastbar ist.

Das erfindungsgemäße Verfahren zum erzeugen eines derartigen Furniers ist im Anspruch 1 beschrieben.

Unter einem Furnierblatt ist hier also ein herkömmliches Furnier aus Holz, z.B. einem Edelholz zu verstehen. Das erfindungsgemäß hergestellte Produkt, also das Furnier im Sinne dieser Anmeldung, ist dann das in der vorstehend beschriebenen Weise verarbeitete Furnierblatt, also ein Produkt, bei dem in das hölzerne Furnierblatt die genannten Polyolefine oder copolymeren Polyolefine etc. eingedrungen sind.

Hierdurch entsteht ein Furnier, das wesentlich besser verformbar ist als herkömmliche Furnierblätter. Dies eröffnet einen weiten Anwendungsbereich für Furniere und ermöglicht auch eine starke Vereinfachung der Verarbeitung von Furnieren im Vergleich zum Stand der Technik.

Die Erfindung sieht vor, daß als Schicht, die unter Druck und Erwärmung in das Holz-Furnierblatt eingelassen wird, sogenanntes ESI verwendet wird. ESI ist ein Ethylen-Styrol-Interpolymer, das von der Firma DOW-Chemical unter dieser Bezeichnung angeboten wird. Es ist ein copolymeres Polyolefin. Seine Eigenschaften mit Blick auf die vorliegende Erfindung sind insbesondere eine sehr gute Verklebbarkeit (unter Druck und Temperatur), eine gute Verformbarkeit, eine gute Dekorierbarkeit mit der "Release"-Technik und eine gute Lackierbarkeit.

Weitere bevorzugte Ausgestaltungen der Erfindung sind in den abhängigen Ansprüchen beschrieben.

Ein erfindungsgemäß hergestelltes Furnier läßt sich bevorzugt so weiterverarbeiten, daß es in der gewünschten Endform (Struktur) in eine Spritzgußmaschine eingespannt und in an sich herkömmlicher Weise mit Kunststoff hinterspritzt wird. Es entsteht so ein hochwertiges stabiles Produkt mit einer hochwertigen, insbesondere ästhetisch ansprechenden Oberfläche. Die Oberfläche ist gut lackierbar und dekorierbar.

Nachfolgend wird die Erfindung anhand der Zeichnung beispielhaft erläutert. Es zeigt:
Figur 1 schematisch eine Illustration des erfindungsgemäßen Verfahrens unter Verwendung eines Furnierblattes und einer darauf liegenden Schicht;
Figur 2 schematisch ein bevorzugtes Ausführungsbeispiel für die zu verarbeitende Polyolefinschicht; und
Figur 3 schematisch ein erfindungsgemäß hergestelltes Furnier.

Zunächst wird ein Furnierblatt 10 aus Holz bereitgestellt.

Auf das Holz-Furnierblatt 10 wird eine Schicht 12 aufgetragen. Die Schicht 12 besteht z.B. aus einem Polyolefin und/oder einem copolymeren Polyolefin oder einer zumindest einen dieser Bestandteile enthaltenden Mischung.

Bevorzugt wird für die Schicht 12 das Material ESI, also ein Ethylen-Styrol-Interpolymer (von DOW-Chemical unter ESI angeboten) verwendet. Die vorteilhaften Eigenschaften dieses Material sind oben erwähnt.

Das Holz-Furnierblatt 10 hat z.B. eine Stärke im Bereich von 200 *µ*m bis 1 mm, je nach vorgesehener Verwendung.

Die aufgetragene Schicht 12 aus z.B. ESI hat bevorzugt eine Stärke von 20 bis 200 *µ*m je nach Stärke und den gewünschten Eigenschaften des herzustellenden Furniers.

Sodann erfolgt eine Verpressung der Schicht 12 mit dem Furnierblatt 10, wobei das Material der Schicht 12 in das poröse Holz des Furnierblatts 10 eindringt. Es können Drucke im Bereich von 5 bis 20 bar eingesetzt werden. Dabei herrschen bevorzugt Temperaturen im Bereich von 150 bis 200°C.

So entsteht ein leicht verformbares Furnier mit guten mechanischen , physikalischen und chemischen Eigenschaften.

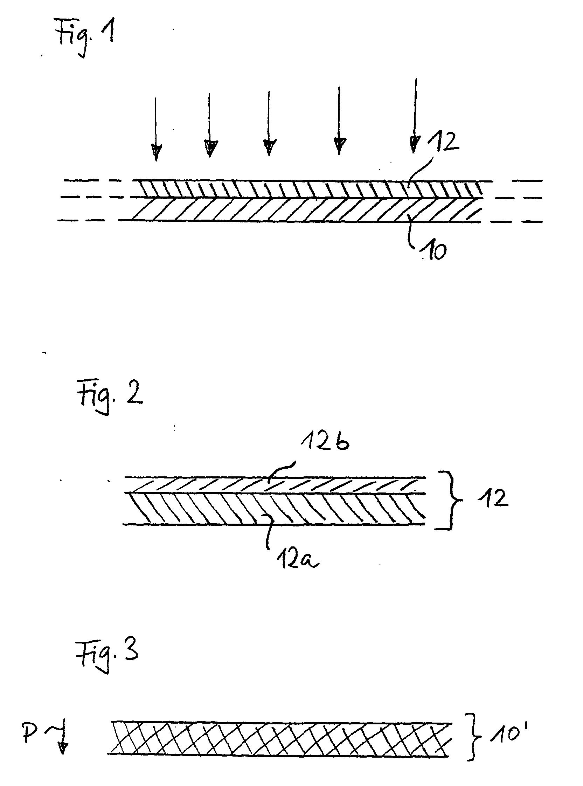

Figur 2 zeigt der Schicht 12 zur Verwendung mit einem Holz-Furnierblatt 10 gemäß Figur 1 (in Figur 2 ist das Holz-Furnierblatt 10 nicht noch einmal gezeichnet). Die Schicht 12 gemäß Figur 2 besteht aus zwei Lagen 12a und 12b. Als Material für beide Schichten ist ESI vorgesehen. Die untere Lage 12a der Schicht 12 kann mehr Ethylen enthalten als die obere Lage 12b. Die untere Lage 12a wird bei der Weiterverarbeitung der Schicht 12 zu unterst auf das Holz-Furnierblatt 10 aufgelegt. Bei der oben erläuterten Anwendung von Druck und Temperatur dringt das Ethylen dann besser in das poröse Holzmaterials des Furnierblattes 10 ein. Die erhöhte Styrolkonzentration in der oberen Lage 12b bewirkt bessere Oberflächeneigenschaften des entstehenden Furniers.

Zum Beispiel können die beiden Schichten 12a, 12b in an sich bekannter Co-Extrusion extrudiert werden.

Figur 3 illustriert schematisch das auf diese Weise erzeugte Furnier 10', also das Furnierblatt 10 mit darin eingelassenen Polyolefinen oder copolymeren Polyolefinen, insbesondere ESI, oder Mischungen daraus. Die Schicht 12 muß nicht völlig homogen in das Furnierblatt 10 eindringen. Es ist durchaus zulässig, daß ein Konzentrationsgradient in Richtung des Pfeiles P von Figur 3 im Endprodukt vorliegt. Dies gilt insbesondere bei Verwendung einer mehrlagigen Schicht 12 mit unterschiedlichen Komponenten, die gezielt unterschiedlich in das Holzmaterial eindringen.

## Patentansprüche

1. Verfahren zum Erzeugen eines Furniers, mit folgenden Schritten:
a) Aufbringen einer Schicht (12) aus einem Polyolefin oder einem copolymeren Polyolefin oder einer solches enthaltenen Mischung auf die Vorderseite eines Holz-Furnierblatts (10), und
b) Verbinden des Furnierblatts (10) und des Materials der Schicht (12) unter Druck von 5 bis 20 bar und Temperaturen von 150 bis 200°C so miteinander, dass das Material der Schicht (12) von der Vorderseite in das Holz des Furnierblattes (10) eindringt, wobei die Schicht (12) Ethylen-Styrol-Interpolymer (ESI) enthält
**dadurch gekennzeichnet, dass**
die Schicht (12) zumindest zwei Lagen (12a, 12b) aufweist mit verschiedenen Anteilen an Ethylen und Styrol.

2. Verfahren nach Anspruch 1, **dadurch gekennzeichnet, dass**
die Schicht (12) 20 bis 200 µm stark ist.

3. Verfahren nach Anspruch 1, **dadurch gekennzeichnet, dass**
das Furnierblatt (10) 200 µm bis 1 mm stark ist.

4. Verfahren nach einem der Ansprüche 1 bis 3, **dadurch gekennzeichnet, dass**
die dem Furnierblatt (10) zugekehrte Lage (12a) der Schicht (12) mehr Ethylen enthält als eine andere Lage (12b) der Schicht (12).

## Claims

1. A method for producing a veneer, comprising the steps of:
a) applying to the front surface of a wood veneer sheet (10) a layer (12) of a polyolefin or a copolymer polyolefin or a mixture containing such polyolefin or copolymer polyolefin, and
b) connecting the veneer sheet (10) and the material of the layer (12) by applying a pressure between 5 and 20 bars and temperatures between 150 and 200 °C such that the material of the layer (12) penetrates from the front surface into the wood of the veneer sheet (10), the layer (12) containing ethylene-styrene interpolymer (ESI),
**characterized in that**
the layer (12) comprises at least two sub-layers (12a, 12b) having different amounts of ethylene and styrene.

2. Method according to claim 1, **characterized in that**
the thickness of the layer (12) is 20 to 200µm.

3. Method according to claim 1, **characterized in that**
the thickness of the veneer sheet (10) is 200 µm to 1 mm.

4. Method according to one of claims 1 to 3, **characterized in that**
the sub-layer (12a) of the layer (12) facing the veneer sheet (10) comprises more ethylene than another sub-layer (12b) of the layer (12).

## Revendications

1. Procédé de fabrication d'un bois de placage, comprenant les étapes suivantes :
a) application d'une couche (12) composée d'un polyoléfine ou d'un polyoléfine copolymère ou d'un mélange contenant un tel composant sur la face de parement d'une feuille de placage en bois (10), et
b) assemblage de la feuille de placage (10) et du matériau composant la couche (12), réalisé sous une pression de 5 à 20 bar et à des températures de 150° à 200°C de sorte que le matériau composant la couche (12) pénètre dans le bois de la feuille de placage (10) depuis la face de parement, ladite couche (12) contenant un interpolymère de styrène et d'éthylène (ESI),
**caractérisé en ce que**
la couche (12) présente pour le moins deux couches (12a, 12b), à savoir une couche inférieure (12a) et une couche supérieure (12b), lesquelles contiennent des fractions d'éthylène et de styrène différentes.

2. Procédé selon la revendication 1, **caractérisé en ce que** la couche (12) est épaisse de 20 à 200 µm.

3. Procédé selon la revendication 1, **caractérisé en ce que** la feuille de placage (10) est épaisse de 200 µm à 1 mm.

4. Procédé selon l'une des revendications 1 à 3, **caractérisé en ce que** la couche inférieure (12a) de la couche (12) tournée vers la feuille de placage (10) contient plus d'éthylène qu'une couche supérieure (12b) de la couche (12).
